# EUROPÄISCHE PATENTSCHRIFT

(11) **EP 1 954 747 B1**
(45) Veröffentlichungstag und Bekanntmachung des Hinweises auf die Patenterteilung: **12.08.2009**
(21) Anmeldenummer: 06791948.0
(22) Anmeldetag: 09.09.2006
(51) Int. Cl.: C08J 5/22

(54) **POLYMERELEKTROLYTMEMBRAN MIT KOORDINATIONSPOLYMER**
POLYMER ELECTROLYTE MEMBRANE COMPRISING COORDINATION POLYMER
MEMBRANE ELECTROLYTE POLYMERE CONTENANT UN POLYMERE DE COORDINATION

(30) Priorität: 25.11.2005 DE 102005056564
(43) Veröffentlichungstag der Anmeldung: 13.08.2008
(73) Patentinhaber: GKSS-Forschungszentrum Geesthacht GmbH, 21502 Geesthacht (DE); Technische Universität Dresden, 01069 Dresden (DE)
(72) Erfinder: GOMES, Dominique de Figueiredo, 21641 Apensen (DE); NUNES, Suzana, 21502 Geesthacht (DE); PEINEMANN, Klaus-Viktor, 21502 Geesthacht (DE); KASKEL, Stefan, 01159 Dresden (DE); ABETZ, Volker, 21335 Lüneburg (DE)
(74) Vertreter: Grebner, Christian Georg Rudolf
(86) Internationale Anmeldenummer: PCT/EP2006/008799
(87) Internationale Veröffentlichungsnummer: WO 2007/059815

(56) Entgegenhaltungen:
- US-A- 4 504 684
- US-A- 6 059 943
- US-B1- 6 624 318

## Beschreibung

Die Erfindung betrifft eine Polymerelektrolytmembran, insbesondere einer Brennstoffzelle, sowie die Verwendung einer Polymerelektrolytmembran. Außerdem betrifft die Erfindung ein Verfahren zur Herstellung einer, insbesondere protonenleitfähigen, Polymerelektrolytmembran, vorzugsweise einer Brennstoffzelle.

Brennstoffzellen gelten als zukunftsweisende emissionsarme Alternative zu konventionellen Energiegewinnungsverfahren. Für mobile Anwendungen ist die Polymerelektrolyt-Membran-Brennstoffzelle (PEM) von besonderem Interesse. Eine protonenleitende Polymermembran ist die zentrale Komponente in diesem Brennstoffzellentyp. Nafion^{®}, bei dem es sich um ein von DuPont hergestelltes perfluoriertes Polymer mit Sulfonsäure-Seitengruppen handelt, und ähnliche Produkte von Asahi sind noch immer die marktbeherrschenden Membranmaterialien für diesen Anwendungszweck.

Es gibt zahlreiche Untersuchungen zur Verwendung anderer Polymere als Membranmaterialien in Brennstoffzellen. Bei diesen Polymeren handelt es sich allerdings fast ausschließlich um sulfonierte Materialien, deren Protonenleitfähigkeit auf Sulfonsäure-Gruppen zurückzuführen ist.

In der Veröffentlichung (M. Yamabe, K. Akiyama, Y. Akatsuka, M. Kato. Novel phosphonated perfluorocarbon polymers. Eur. Polym. J. 36 (2000) 1035-41) wird die Synthese von perfluorierten Polymeren mit Phosphonsäure-Seitengruppen, ausgehend von perfluorovinyloxysubstituierten Phosphonsäuren als Monomere, beschrieben, die dann mit Tetrafluoroethylen und Perfluoropropylvinylether copolymerisiert werden. Die Verwendung derartiger Polymere in Brennstoffzellen ist in der US-A-6 087 032 beschrieben.

Weitere Brennstoffzellenmembranen aus Polymeren mit Phosphonsäure-Seitengruppen sind beispielsweise in der US-A-5 422 411 beschrieben. Weitere Polymere zur Anwendung in Brennstoffzellen sind in der US-A-5 679 482 beschrieben. Es handelt sich dabei um fluorfreie Styrol-Copolymere mit einer gemischten Funktionalisierung aus Sulfonsäure- und Phosphonsäure-Gruppen.

Polymer-Elektrolyt-Membran-Brennstoffzellen (PEM-Brennstoffzellen) bestehen aus zwei Elektroden, die durch eine protonenleitende Membran (Polymer Electrolyte Membran oder Protone Exchange Membran) voneinander getrennt sind. Die Elektroden bestehen z.B. aus Kohlenstoffmatten, die mit Platin bedampft und über einen äußeren Stromkreis miteinander verbunden sind. Damit eine Umsetzung von Wasserstoff und Sauerstoff zu Wasser erfolgen kann, muss die protonenleitende Membran befeuchtet werden. Der Anode wird kontinuierlich der Brennstoff Wasserstoff zugeführt. Die Kathode wird ständig mit Sauerstoff versorgt. Zwei Arten vom PEM-Brennstoffzellen sind in der Entwicklung: Niedertemperaturzellen (bis etwa 90°C) und Hochtemperaturzellen (bis etwa 180°C).

Die Niedertemperaturzelle wurde in den 60er-Jahren entwickelt. Damals diente eine sulfonierte Polystrol-Membran als Elektrolyt. Seit 1969 wird die von DuPont entwickelte Nafion^{®}-Membran in die PEM-Brennstoffzellen eingebaut. Niedertemperaturzellen reagieren empfindlich auf Kohlenmonoxid (CO). Dieses Gas kann den Anodenkatalysator blockieren, was zu einem Leistungsabfall führt. Die Membran muss befeuchtet werden, damit Protonen geleitet werden können.

Hochtemperaturzellen reagieren gegenüber CO und anderen Verunreinigungen unempfindlich. Höhere Arbeitstemperaturen in der Zelle sind für die Hausenergie interessant, da sie eine effektivere Ausnutzung der entstehenden Wärme ermöglichen. Da die Membran ohne Wasser Protonen leitet, muss sie nicht befeuchtet werden.

Hinsichtlich der Membranen für Hochtemperaturzellen gibt es bereits Lösungsvorschläge. In US 6,387,230 B1 wird beispielsweise für Hochtemperaturzellen eine Reihe von Membranen vorgeschlagen, die aus Verbund aus Polymeren und aus organischen bzw. anorganischen Materialen (inorganic-organic composite membranes) bestehen.

Aufgabe der vorliegenden Erfindung ist es, eine protonenleitfähige Membran bereitzustellen, wodurch es möglich ist, Brennstoffzellen bei höheren Temperaturen, insbesondere über 100°C, zu betreiben.

Gelöst wird diese Aufgabe durch eine Polymerelektrolytmembran, insbesondere einer Brennstoffzelle, die dadurch weitergebildet wird, dass die Polymerelektrolytmembran Koordinationspolymere (Metal Organic Frameworks) enthält.

Die hier vorliegende Erfindung schlägt eine neuartige protonenleitende bzw. protonenleitfähige Membran für elektrochemische Anwendungen vor, die aus einer Polymer/MOF-Mischung (MOF: Metal-Qrganic-Frameworks) besteht und für die Hochtemperaturzellen geeignet ist.

Gemäß der Erfindung kann die Protonenleitfähigkeit von bekannten Polymerelektrolyten bei höheren Temperaturen deutlich durch Mischung von MOF's gesteigert werden.

Zur Herstellung der erfindungsgemäßen Membran wird zunächst ein Polymer z. B. aus sulfoniertem Poly(ether ether keton), also SPEEK, in einem polaren, organischen Lösungsmittel aufgelöst. Zu dieser Lösung werden dann feinkristalline MOFs-Partikel zugegeben. Nach dem Gießen werden die so hergestellten Komposit-Membrane getrocknet.

Der entscheidende Vorteil der vorliegenden Erfindung ist die Tatsache, dass Komposit-Membranen unter Anwendung von MOFs nicht als Membran für PEM-Brennstoffzellen eingesetzt worden sind. Außerdem liegt die Protonenleitfähigkeit der erfindungsgemäßen Membran bei erhöhter Temperatur höher als bei herkömmlichen Membranen z.B. aus Nafion^{®}.

Durch den Zusatz von Koordinationspolymeren zu ansonsten für die Membranherstellung üblichen Polymeren können Polymerelektrolytmembranen mit neuen Eigenschaften hergestellt werden. Diese Eigenschaften ermöglichen eine hohe Permeabilität und auch eine hohe Selektivität bei einer daraus hergestellten Membran. Wenn dem ersten Polymer ein Koordinationspolymer hinzugefügt wird, das eine metallorganische Gerüststruktur mit permanenter Porösität ist, kann die Gaspermeabilität des Kompositmaterials bzw. einer entsprechenden Kompositmembran bei gleicher Dicke im Vergleich zu üblichen Membranen erhöht werden. Dieses liegt an einem relativ großen, zugänglichen Volumen im Inneren des Kompositmaterials, hervorgerufen durch die Porösität der metallorganischen Gerüststruktur (die im Folgenden MOF genannt wird).

Vorzugsweise liegt das Koordinationspolymer in Kristallform, insbesondere in Kristall-Clustern, vor. Die Kristall-Cluster haben vorzugsweise eine Erstreckung von ungefähr 0,1 1 µm bis 50 µm und insbesondere vorzugsweise von 0,4 µm bis 10 µm. Bei einer Kompositmembran ist die Erstreckung vorzugsweise im Bereich von 0,1µm bis 1 µm, insbesondere bei 0,5 µm. Vorzugsweise ist das Koordinationspolymer katalytisch aktiv. Bei Verwendung einer entsprechenden sorptionsselektiven Gerüststruktur kann die Selektivität entsprechend gesteigert werden. Bei entsprechenden Koordinationspolymeren bzw. metallorganischen Gerüststrukturen (MOF von Metal Organic Frameworks) sind Polymere vorgesehen, die aus vielen niedermolekularen Liganden aufgebaute Hauptketten umfassen, die durch Metallkomplexe und damit durch koordinative bzw. ionische Bindungen zusammengehalten werden. Die Entfernung der Metallzentren geht bei den Koordinationspolymeren üblicherweise einher mit dem Abbau der Polymerketten zu niedermolekularen Produkten.

Die Membran weist vorzugsweise kovalent gebundene negativ geladene funktionelle Gruppen auf. D.h. die Membran weist eine Schicht eines Polyelektrolyten auf, wobei dessen ionische Gruppen an perfluorierte und/oder Kohlenwassestoff-basierte Polymergerüste bzw. Polymere gebunden sind.

Spezifische Polymere, die als Membran der, insbesondere protonleitenden, Polymerelektrolyten verwendet werden können, umfassen Nafion^{®} und/oder, insbesondere sulfonierte, phosphonierte oder dotierte, Poly(amide imide), Poly(ether sulfone), Poly(ether ether ketone), Poly(ether ketone ketone), Poly(ether imide), Poly(phosphazene), Poly(phenoxy benzoyl phenylene), Poly(benzimidazole) und Poly(azole).

Hierzu weist das Membranpolymer säureleitfähige Gruppen, z.B. Sulfon-Carboxyl, Phosphon-, Sulfonimid-, oder Borsäuregruppen, auf. Dadurch weisen die Polymere aus Poly(amid imid), Poly(ether sulfon), Poly(ether ether keton), Poly(ether imid), Poly(phosphazen) und Poly(phenoxy benzyl phenylen) Sulfon-, Carboxyl-, Phosphon- oder Sulfonimidgruppen auf. Das Polymer aus Poly(benziamidazol) oder Poly(azol) kann Sulfon-, Carboxyl-, Phosphon-, Sulfonimid- oder Borsäuregruppen aufweisen.

Ein besonders bevorzugtes Polymermaterial ist sulfoniertes Poly(ether ether ketone), SPEEK, das die Wiederholungseinheiten der folgenden Struktur aufweist:

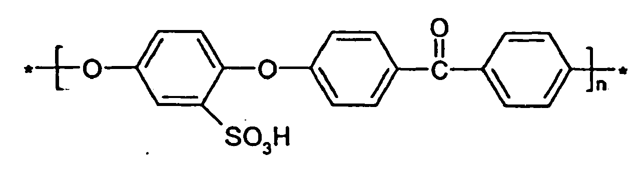

Der bevorzugte Sulfonierungsgrad von SPEEK ist kleiner als 70 %, insbesondere kleiner als 60 %, und vorzugsweise weniger als 50 %. Studien zeigen, dass SPEEK-Membranen mit einem Sulfonierungsgrad von ungefähr 50 % bessere Leistungen bei Direct Methanol Fuel Cells (DMFC) im Vergleich zu Nafion^{®} haben (vgl. Yang B., Manthiram A., Sulfonated Poly(ether ether ketone) membranes for direct methanol fuel cells. Electrochemical and Solid-Sate Letters 6 (2003) A229-A231).

Die bevorzugten feinporösen Partikel sind Partikel eines Koordinationspolymers, d.h. ein so genanntes Metal-Organic Framework (MOF). Die Koordinationspolymere bzw. die MOFs werden zusammengesetzt aus einem organischen Linker und einem Übergangsmetall oder Cluster, wobei beide Einheiten Blöcke mit einer dreidimensionalen offenen Gerüststruktur bilden. Ihre Synthese aus molekular gebildeten Blöcken bietet das Potential zur gezielten Anpassung ihrer Eigenschaften, die durch das Metall, die Verbindung oder einem anschließenden Liganden bestimmt werden kann. Die Größe und das chemische Umfeld der entstandenen Hohlräume werden durch die Länge und die Funktionalitäten der organischen Einheit definiert.

Bekannte Stoffklassen von porösen Feststoffen werden als metallorganische Gerüststrukturen (englisch: Metal Organic Frameworks=MOFs) oder Koordinationspolymere bezeichnet. Die von Alfred Werner entwickelte Theorie von Koordinationsverbindungen [A. Werner, Z. Anorg. Allg. Chem. 3 (1893) 267] ermöglichte es erstmals, die experimentellen Ergebnisse der anorganischen Komplexchemie zu verstehen. Durch Zusatz organischer, zur Komplexbildung fähiger Moleküle wie z.B. von Diaminen oder Disäuren zu gelösten Salzen werden stabile MOFs erhalten. Die Abstände zwischen den durch die Metallionen als Koordinationszentren gegebenen Gitterpunkten können durch die Struktur, besonders der organischen Komponenten, in einem weiten Bereich eingestellt werden und ergeben mikro- bis mesoporöse Stoffe. Der Abstand der funktionellen Gruppen der organischen Bestandteile gibt wesentlich die Porengröße vor, die Art der metallischen Komponente(n) entscheidet über eventuelle katalytische Eigenschaften. MOFs bzw. Koordinationspolymere können so vielfältig variiert werden und sind umfangreich dokumentiert [S. Kitagawa, et al. Angew. Chem. Int. Ed. 43 (2004) 2334].

Vom Aufbau des Koordinationspolymers her kann das große innere Volumen zur Sorption bzw. Kondensation von Gasen und Dämpfen genutzt werden. Weitere Anwendungsmöglichkeiten ergeben sich aus dem Metallbestandteil der MOFs. Die katalytischen Eigenschaften von Metallen bzw. Metallsalzen bleiben auch bei dem chemischen Umbau zu MOFs erhalten bzw. verändern sich. Durch die leicht zugängliche innere Oberfläche können auch verbesserte katalytische Eigenschaften entstehen. MOFs sind in der Regel temperaturbeständig bis >300°C und besitzen je nach Gitterabstand bzw. Porengröße geringe Dichten von 0.8 bis 0.2 g/cm³. MOFs mit katalytischen Eigenschaften sind z.B. als Katalysatoren für die Hydroformylierung und Hydrierung [Fox und Pesa, US 4,504,684] oder die Epoxidierung [Müller, et al. US 6,624,318 B1] beschrieben.

Da die MOFs aus anorganischen Salzen und organischen Verbindungen, wie z.B. Diaminen und Disäuren, bestehen, ist die Verträglichkeit mit elastomeren und auch glasartigen Polymeren sehr viel größer als mit reinen anorganischen Stoffen wie Zeolite und auch Kohlenstoff-Molekularsiebe. Bisher wurde diese Verbindungsklasse noch nicht zu Polymeren zugesetzt und die Verträglichkeit bzw. die veränderten Eigenschaften in Bezug auf Gaspermeabilität und Selektivität untersucht.

MOFs mit Porengrößen zwischen 0,3 nm bis 1,5 nm werden bevorzugt, da MOFs mit größeren Poren Zentren aufweisen, die für organische Modifikationen oder Funktionalisation verfügbar sind, wodurch der Protonentransport begünstigt wird.

Bevorzugte zweiwertige Übergangsmetalle sind Zn, Cu Co, Ni, Cd, Fe, Mo, Rh und Mn. Jedoch sind auch dreiwertiges Al (Aluminium) und vier- oder fünfwertiges V (Vanadium) wichtig.

Bevorzugte organische Linker, die zur Synthese von MOFs verwendet werden, umfassen:
i) Phosphonate, beispielsweise mit einer Strukturformel: 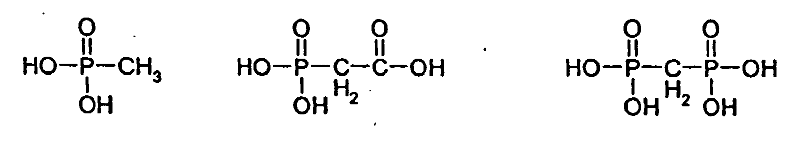
ii) Terephthalsäure oder Carboxylate, die beispielsweise eine Strukturformel aufweisen: 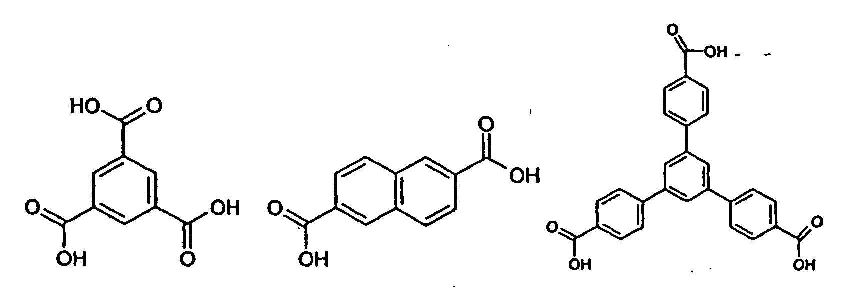
iii) Diazabicyclooctan oder Stickstoff-Donorkomplexe, beispielsweise mit einer Strukturformel:

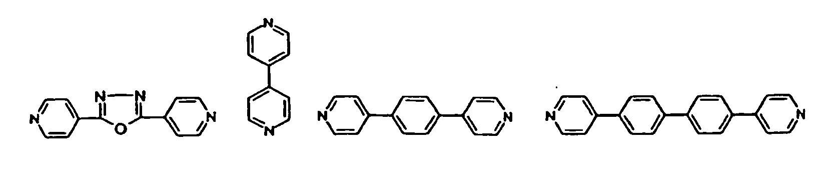

MOF mit Koordinationsstellen und Wassermolekülen im Inneren der Porenwand werden bevorzugt, genauso wie MOF mit Koordinationsstellen, die nicht von der aus Liganten bestehenden Gerüststruktur blockiert werden.

Sowohl die geringe Größe als auch die organischen Eigenschaften der porösen Koordinationspolymere bzw. -komplexe verbessern die Grenzflächenkompatibilität mit dem Polymer. Die Beladung der Partikel ist vorzugsweise gering, um eine homogene Kompositmembran zu bilden. Daher ist es bevorzugt, dass die Partikelladung (ausgedrückt als das Verhältnis von Gewicht der Partikel zum (Gewicht von Polymer und Partikel) x 100 %) nicht mehr als 20 % in Bezug auf den Polymerinhalt, vorzugsweise weniger als 10, insbesondere nicht mehr als 3 Gew. % beträgt.

Außerdem ist es bevorzugt, wenn die Partikel gut über die Polymerschicht verteilt sind, so dass die Polymer/Partikelkomposition im Wesentlichen gleichmäßig ausgebildet ist. Dazu ist es bevorzugt, dass die Dispersion oder Lösung, die die Partikel enthält, gut verrührt ist oder wird, insbesondere bevor ein Film gegossen wird.

Aufgrund ihrer exzellenten thermischen Eigenschaften können die auf Koordinationspolymeren basierten Membranen als Elektrolytmembranen in Brennstoffzellen bei Temperaturen über 100°C, insbesondere über 120°C, ohne zusätzliche Anfeuchtung des Brennstoffs der Anode zugeführt werden. Die Verfahrensabläufe zur Gewinnung von Energie in eine Brennstoffzelle (fuel cell) sind hinreichend bekannt und dem Fachmann geläufig.

Das der Anode zugeführte Brennstoffzellenmedium kann Wasserstoff, Methanol (flüssig oder gasförmiges Methanol/WasserGemisch) oder Ethanol (flüssig oder gasförmiges Methanol/WasserGemisch) sein.

Höhere Betriebstemperaturen in der Brennstoffzelle ermöglichen die Reduktion von wertvollen Metallladungen und die Vereinfachung von kostspieligen Gaskonditionierungen oder Reinigungen, während die Anforderungen an die Flüssigkeitszufuhr reduziert werden, wodurch die Anforderungen, das System unter Druck zu setzen, vermieden werden können.

Durch die Erfindung wird eine Membran mit einer hohen Protonenleitfähigkeit bei Temperaturen höher als 100°C ohne zusätzliche Flüssigkeitszufuhr des Treibstoffs bereitgestellt, der der Anode zugeführt wird.

Die Membran dient als Barriere zur Gas/Flüssigkeitsdiffusion, wobei allerdings den Protonen erlaubt wird hindurch zu treten. Der Fluss der Protonen durch das Elektrolyt muss im Gleichgewicht gehalten durch den Fluss der elektronischen Ladung durch den äußeren Kreis werden, so dass dieses Gleichgewicht elektrische Energie erzeugt.

Die Protonenbewegung in der Membran ist mit dem Wassergehalt der Membran verbunden bzw. gekoppelt. Aufgrund der ähnlichen Eigenschaften von Methanol und Wasser mit seinem Dipolmoment, werden Methanmoleküle wie Wassermoleküle zur Kathode aufgrund der elektroosmotischen Kraft sowie Diffusion transportiert. An der Kathode mindert Methanol die Brennstoffzellenleistungsfähigkeit. Durch die Erfindung wird eine Membran mit einer geringen Permeabilität für Methanol bereitgestellt.

Die erfindungsgemäße Membran kombiniert eine hohe Protonenleitfähigkeit bei Temperaturen höher als 100°C ohne zusätzliche Befeuchtung des Brennstoffs, der zu der Anode geführt wird und mit einer passenden Methanolpermeabilität.

Die Erfindung wird durch die nachfolgenden Beispiele in weiteren Einzelheiten beschrieben. Die Beispiele sollen die Erfindung verdeutlichen, ohne den Anwendungsbereich in irgendeiner Weise zu beschränken.

### Beispiele

### Beispiel 1

### Polymersynthese

Ein sulfoniertes Poly(ether ether ketone) (SPEEK) Polymer mit einem Sulfonierungsgrad von 51 % (Ionenaustauschkapazität 1,57 meq/g) wurde präpariert für ein Verfahren, das in Wijers M.C., Supported liquid membranes for removal of heavy metals: permeability, selectivity and stability. Dissertation, University of Twente, The Netherlands, 1996, berichtet worden ist. Poly(ether ether ketone), die als Granulat von Victrex bereitgestellt worden sind, wurde in einem Vakuum bei 90°C über Nacht getrocknet. Anschließend wurden 20 g des Polymers in 1 Liter konzentrierter Schwefelsäure (95 % bis 98 % ) gelöst und bei Raumtemperatur für 45 Stunden gerührt. Danach wurde die Polymerlösung in K₂CO₃-haltigem Eiswasser bei mechanischem Rühren ausgefällt, bis der pH-Wert neutral war. Das ausgefällte Polymer wurde über Nacht zurückgelassen. Das ausgefällte Polymer wurde anschließend gefiltert und mehrere Male mit destilliertem Wasser gewaschen und für 12 Stunden bei 80°C getrocknet. Der Sulfonierungsgrad wurde durch Elementanalyse bestimmt, wie sie beschrieben worden ist in Nolte R., Ledjeff K., Bauer M., Mulhapt R., Partially sulfonated poly(arylene ether sulfone) - a versatile proton conducting membrane material for modern energy conversion technologies, J. Memb. Sci. 83 (1993) 211-220.

### Polymerreinigung

Eine Polymersuspension, enthaltend 18 g Polymermaterial in 1 Liter Wasser, wurde getrocknet und gerührt. Die Polymersuspension wurde gefiltert und mit destilliertem Wasser 10 mal 24 Stunden bei Raumtemperatur gewaschen. Anschließend wurde die Polymersuspension für 12 Stunden bei 80°C. getrocknet.

### Polymermembranpräparation

2,3 g Polymer wurden in 33 g Dimethylsulfoxid (7 Gew. %) gelöst. Die Lösung wurde auf eine Glasplatte bei 60°C zur Verdampfung der Flüssigkeit ausgegossen. Die Glasplatte wurde vorher mit Oktadecyl-Trichlorosilan hydrophobisiert. Nach dem Ausgießen wurde die SPEEK-Membran in einem Vakuum für 12 Stunden bei 80°C getrocknet. Die endgültige Dicke der Membran betrug 83 µm. Die sulfonierte Membran wurde in ihre Säureform umgewandelt durch Eintauchen der gegossenen Membran in 2 N Schwefelsäure bei Raumtemperatur für 24 Stunden, gefolgt durch Eintauchen in Wasser für 2 mal 24 Stunden, um eine vollständige Auswaschung der verbleibenden Schwefelsäure zu gewährleisten.

### Beispiel 2

### MOF-Synthese

MOF (Cu₃(BTC)₂(H₂O)₃.xH₂O wurde synthetisiert, wie in Schlichte K., Kratzke T., Kaskel S., Improved synthesis, thermal stabiiity and catalytic properties of the metal-organic framework compound Cu3(BTC)2,Microporous and Mesoporous Materials 73 (2004), 81-88 beschrieben. 0,857 g (3,6 mmol) Cu(NO₃)₂.3H₂O wurden in 12 ml entionisiertem Wasser gelöst und mit 0,42 g (2,0 mmol) Trimesinsäure gemischt, die in 12 ml Methanol gelöst worden sind. Die Lösung wurde in einen 40 ml Teflonbehälter gegeben, der in einen Autoklaven eingesetzt wurde, und auf 120°C für 12 Stunden erhitzt. Die Synthesetemperatur (120°C) ließ zu, die Bildung von Cu₂O zu unterdrücken, da die Reduktion der Cu²⁺-lonen vermieden wurde. Die MOF wurde durch Stickstoffphysisorption und Röntgenstrahldiffraktometrie charakterisiert. Die Stickstoffphysisorptionmessung wurde bei 77 K unter Verwendung eines Micromeritics ASAP 2000 Instruments ausgeführt. Das Röntgenpulverdiffraktogramm wurden mit einem STOE-Diffraktometer aufgenommen, das mit einem positionssensitiven Detektor (Braun, 6°) und einem Germanium-Primärstrahlmonochromator im Transition Mode unter Anwendung einer CuKα-Strahlung ausgestattet war. Ein Röntgenpulverdiffraktogramm von MOF zeigt Reflektionen, die mit einem berechneten Muster aus kristallographischen Daten (die vertikalen und diagonalen O-O-Abstände betragen jeweils 8,25 und 10,67 Å (Angström)) verglichen wurde. Die gleiche Geometrie wird erreicht für Kupferatome, jedoch sind die entsprechenden Cu-Cu Abstände jeweils 11,3 und 16,0 Å (Angström). Ein Type I-Isotherme wird beobachtet für das mikroporöse Netzwerk mit einem spezifischen mikroporösen Volumen von 0,41 cm³g und einer Horvath-Kawazoe (HK) Porengröße von 10,7 Å (Angström) Zylindermodell. Die thermische Stabilität wurde durch TG/DTA untersucht. Die Auflösung des Netzwerks erfolgte bei 350°C, wie bereits berichtet in Schlichte K., Kratzke T., Kaskel S., Improved synthesis, thermal stabiiity and catalytic properties of the metal-organic framework compound Cu3(BTC)2, Microporous and Mesoporous Materials 73 (2004), 81-88.

### Beispiel 3

### Kompositmembranpräparation

2,3 g Polymer wurden in 33 g Dimethylsulfoxid (7 Gew. %) gelöst. Anschließend wurden 0,12 g MOF zu der Polymerlösung (5 Gew. %, ausgedrückt als Gewicht von MOF/(Gewicht von Polymer und MOF) x 100 %). Die Lösung wurde für 6 Stunden gerührt und auf eine Glasplatte bei 60°C für die Entfernung des Lösemittels ausgegossen. Die Glasplatte wurde vorher mit Oktadecyl Trichlorosilan hydrophobisiert. Nach dem Gießen wurde die SPEEK-Membran, enthaltend 5 % MOF, in einem Vakuumofen für 10 Stunden bei 80°C getrocknet. Die endgültige Dicke der Membran betrug 96 µm. Die sulfonierte Kompositmembran wurde in ihre Säureform konvertiert durch Eintauchen der gegossenen Membran in 2 N Schwefelsäure bei Raumtemperatur für 24 Stunden, gefolgt von einem Tauchbad in Wasser für 2 mal 24 Stunden, um ein vollständiges Ausbleichen der verbleibenden Schwefelsäure zu gewährleisten.

### Beispiel 4

### Protonenleitfähigkeitsmessungen

Die Protonenleitfähigkeit wurde durch die Wechselstromimpedanzspektroskopie im Frequenzbereich 10 bis 10⁶ Hz bei Signalamplituden ≤ 100 mV gemessen und aus dem Impedanzwert bei Null-Phasenverschiebung (Hochfrequenzseite) erhalten. Die Protonenleitfähigkeit der Proben wurde bei Temperaturen, die sich von 40°C bis 140°C erstrecken, und bei 100 % relativer Feuchtigkeit bestimmt. Die Impedanzmessungen wurden an Stapeln mit fünf Membranen (ähnliche kumulative Dicke von ungefähr 500 µm) ausgeführt. Die relative Feuchtigkeit wurde kontrolliert unter Verwendung einer rostfreien abgeschlossenen Stahlzelle, bestehend aus zwei zylindrischen Innenräumen, die über eine Röhre miteinander verbunden sind und auf verschiedenen Temperaturen gehalten werden. Der kalte Innenraum enthielt Wasser, während der heiße Innenraum die Membran zur Prüfung beherbergt. Die relative Feuchtigkeit wurde üblicherweise aus dem Verhältnis zwischen den Drücken des gesättigten Wasserdampfs bei Temperaturen des kalten und des heißen Kompartments berechnet.

### Nafion^{®}-Membranpräparation

35 g einer 5 Gew. % Nafion^{®}-Lösung (DuPont) wurde auf eine Glasplatte bei 60°C gegossen zur Verdampfung des Lösemittels. Die Glasplatte wurde zuvor mit Oktadecyl Trichlorosilan hydrophobisiert. Nach dem Gießen wurde die Nafion^{®}-Membran in einem Vakuumofen für 12 Stunden bei 80°C getrocknet. Die endgültige Dicke der Membran betrug 41 µm

Kompositmembranen, die mit MOFs präpariert worden sind, haben höhere Protonenleitfähigkeitswerte als die einfachen Membranen über alle Temperaturbereiche, weil die MOFs Wasser in ihren Hohlräumen speichern können. Verglichen mit anderen metallorganischen Gerüststrukturen, bei denen die meisten der Koordinationsstellen durch Gerüststrukturen, die einen Liganden aufnehmen, blockiert werden, hat Cu₃(BTC)₂ (Hauptporengröße 10,7 Ǻ (Angström)) den Vorteil, dass die Lewissäure-Koordinationsstellen und die Wassermoleküle (12 Wassermoleküle pro Pore) auf der Innenseite der Porenwände sind. Die Cu²+-Ionen werden durch schwache Bindungen gebunden und die verbleibenden Koordinationsstellen werden durch schwach gebundene Wassermoleküle gefüllt, die zum Inneren der Poren weisen. Wegen ihrer schwachen wasserstoffgebundenen Struktur werden Trenn- und Verbindungsprozesse für einen Protonentransport begünstigt.

### Beispiel 5

### Permeabilitäten von Membranen für Wasser und Methanol

Die Wasser- und Methanol- Permeabilitäten über die Membranen werden gemessen durch die Pervaporation bei 55°C unter Verwendung einer Milipore-Zelle mit 47 mm Membrandurchmesser. Eine 1,5 M Methanollösung wurde auf die Feed-Seite gegeben. Die Permeatseite wurde evakuiert. Das Permeat wurde in einer Falle gesammelt, die in flüssigen Stickstoff eingetaucht wurde, nach Zeitintervallen zwischen 1 bis 3 Stunden. Die Menge des Permeats wurde gewogen und die Zusammensetzung durch Gaschromatographie bestimmt. Vor den Messungen wurden die Membranproben in eine Feed-Lösung eingetaucht. Tabelle 1 zeigt die Ergebnisse.

**Tabelle 1**

| Membran | Dicke (µm) | Pervaporationsfluss (g / (h m²)) (feed 5.2 Gew.% Methanol) | |
|---|---|---|---|
| | | Methanol | Wasser |
| SPEEK | 83 | 110 | 4400 |
| SPEEK + 5%MOF | 96 | 210 | 7000 |

Die Methanolpermeabilität von der SPEEK-Membran mit 5 Gew. % MOF liegt höher als die der einfachen Membran und noch niedriger als die von Nafion^{®} 115 (vgl. Gaowen Z. and Zhentao Z., Organic/inorganic composite membranes for application in DMFC, J. Memb. Sci. (2005)).

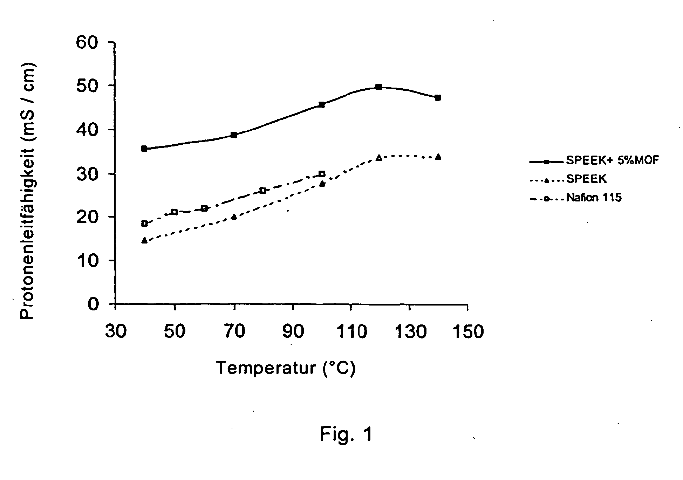

Fig. 1 zeigt eine Darstellung der Protonenleitfähigkeit von drei Membranen SPEEK, SPEEK + 5 % MOF und Nafion^{®} 115 in Abhängigkeit der Temperatur für SPEEK-Membranen, gemessen bei 100 % relativer Feuchtigkeit von 40°C bis 140°C. Es ist der Fig. 1 zu entnehmen, dass die SPEEK-Membran mit 5 % MOF eine deutlich bzw. signifikant höhere Protonenleitfähigkeit (Faktor 1,5 bis über 2) gegenüber den beiden anderen Membranen im Temperaturbereich zwischen 40°C bis 140°C aufweist. Beispielsweise beträgt die Protonenleitfähigkeit der SPEEK-Membran mit 5 % MOF ungefähr 5,0 10⁻² S/cm bei 120°C.

## Patentansprüche

1. Polymerelektrolytmembran, insbesondere einer Brennstoffzelle, **dadurch gekennzeichnet, dass** die Polymerelektrolytmembran Koordinationspolymere (Metal Organic Frameworks) enthält.

2. Polymerelektrolytmembran nach Anspruch 1, **dadurch gekennzeichnet, dass** die Polymerelektrolytmembran kovalent gebundene negativ geladene funktionelle Gruppen und/oder eine Schicht eines Polymerelektrolyts aufweist, wobei vorzugsweise dessen ionische Gruppen an perflorierte und/oder Kohlenwasserstoff-basierte Polymergerüste bzw. Polymere gebunden sind.

3. Polymerelektrolytmembran nach Anspruch 1 oder 2, **dadurch gekennzeichnet, dass** das Membranpolymer Nafion^{®} und/oder, insbesondere sulfonierte, phosphonierte oder dotierte, Poly(amide imide) und/oder Poly(ether sulfone) und/oder Poly(ether ether ketone) und/oder Poly(ether ketone ketone) und/oder Poly(ether imide) und/oder Poly(phenoxy benzoyl phenylene) und/oder Poly(benzimidazole) und/oder Poly(azole) aufweist.

4. Polymerelektrolytmembran nach einem der Ansprüche 1 bis 3, **dadurch gekennzeichnet, dass** das Membranpolymer ein sulfoniertes Poly(ether ether keton), SPEEK, ist.

5. Polymerelektrolytmembran nach Anspruch 4, **dadurch gekennzeichnet, dass** der Sulfonierungsgrad von SPEEK kleiner als 70 %, insbesondere kleiner als 60 %, und vorzugsweise weniger als 50 %, ist.

6. Polymerelektrolytmembran nach einem der Ansprüche 1 bis 5, **dadurch gekennzeichnet, dass** die Elementarzelle des Koordinationspolymers eine Größe im Bereich von 0,3 bis 15 nm aufweist.

7. Polymerelektrolytmembran nach einem der Ansprüche 1 bis 6, **dadurch gekennzeichnet, dass** das Koordinationspolymer aus einem organischen Linker mit wenigstens einer Phosphonat- und/oder Carboxylatgruppe und/oder Stickstoff-Donorkomplexe ausweist.

8. Polymerelektrolytmembran nach einem der Ansprüche 1 bis 7, **dadurch gekennzeichnet, dass** das Koordinationspolymer mit Koordinationsstellen und Wassermolekülen an der Innenseite der Porenwand versehen ist.

9. Polymerelektrolytmembran nach einem der Ansprüche 1 bis 8, **dadurch gekennzeichnet, dass** das Koordinationspolymer mit Koordinationsstellen ausgebildet ist, die nicht aus MOF-Liganden besetzt sind.

10. Polymerelektrolytmembran nach einem der Ansprüche 1 bis 9, **dadurch gekennzeichnet, dass** das Koordinationspolymer bei einer Beladung von weniger als 20 Gew. %, insbesondere weniger als 10 Gew. %, vorzugsweise weniger als 3 Gew. %, im Membranpolymer enthalten ist.

11. Verwendung einer Polymerelektrolytmembran nach einem der Ansprüche 1 bis 10 in einer Brennstoffzelle.

12. Verfahren zur Herstellung einer, insbesondere protonenleitfähigen, Polymerelektrolytmembran, vorzugsweise einer Brennstoffzelle, mit den folgenden Verfahrensschritten:
a) Lösen eines Polymers in einer, vorzugsweise polaren, organischen Lösung,
b) Lösen oder Suspendieren eines Koordinationspolymers (Metal Organic Frameworks) in der Polymerlösung aus Verfahrensschritt a),
c) Gießen der Lösung oder Suspension zu einem Film von Verfahrensschritt b) und
d) Trocknung des Films aus Verfahrensschritt c).

13. Verfahren nach Anspruch 12, **dadurch gekennzeichnet, dass** als Membranpolymer Nafion^{®} und/oder, insbesondere sulfonierte, phosphonierte oder dotierte, Poly(amide imide) und/oder Poly(ether sulfone) und/oder Poly(ether ether ketone) und/oder Poly(ether ketone ketone) und/oder Poly(ether imide) und/oder Poly(phenoxy benzoyl phenylene) und/oder Poly(benzimidazole) und/oder Poly(azole) in der organischen Lösung gelöst werden.

14. Verfahren nach Anspruch 12 oder 13, **dadurch gekennzeichnet, dass** als Membranpolymer ein sulfoniertes Poly(ether ether keton), SPEEK, gelöst wird.

15. Verfahren nach Anspruch 14, **dadurch gekennzeichnet, dass** der Sulfonierungsgrad von SPEEK kleiner als 70 %, insbesondere kleiner als 60 %, und vorzugsweise weniger als 50 %, ist.

## Claims

1. A polymer electrolyte membrane, particularly of a fuel cell, **characterised in that** the polymer electrolyte membrane contains coordination polymers (Metal Organic Frameworks).

2. A polymer electrolyte membrane as claimed in Claim 1, **characterised in that** the polymer electrolyte membrane has covalently bonded, negatively charged functional groups and/or a layer of a polymer electrolyte, wherein its ionic groups are preferably bonded to perfluorinated and/or hydrocarbon-based polymer frameworks or polymers.

3. A polymer electrolyte membrane as claimed in Claim 1 or 2, **characterised in that** the membrane polymer includes Nafion^{®} and/or, particularly sulphonated, phosphonated or dosed, poly (amide imides) and/or poly (ether sulphones) and/or poly (ether ether ketones) and/or poly (ether ketone ketones) and/or poly (ether imides) and/or poly (phenoxy benzoyl phenylenes) and/or poly (benzimidazoles) and/or poly (azoles).

4. A polymer electrolyte membrane as claimed in one of Calims 1 to 3, **characterised in that** the membrane polymer is a sulphonated poly (ether ether ketone), SPEEK.

5. A polymer electrolyte membrane as claimed in Claim 4, **characterised in that** the degree of sulphonation of the SPEEK is less than 70%, particularly less than 60% and preferably less than 50%.

6. A polymer electrolyte membrane as claimed in one of Claims 1 to 5, **characterised in that** the unit cell of the coordination polymer has a size in the range of 0.3 to 15nm.

7. A polymer electrolyte membrane as claimed in one of Claims 1 to 6, **characterised in that** the coordination polymer is an organic linker with at least one phosphonate and/or carboxylate group and/or nitrogen-donor complexes.

8. A polymer electrolyte membrane as claimed in one of Claims 1 to 7, **characterised in that** the coordination polymer is provided with coordination points and water molecules on the inner surface of the pore wall.

9. A polymer electrolyte membrane as claimed in one of Claims 1 to 8, **characterised in that** the coordination polymer is formed with coordination points which are not occupied by MOF ligands.

10. A polymer electrolyte membrane as claimed in one of Claims 1 to 9, **characterised in that** the coordination polymer is contained in the membrane polymer at a loading of less than 20wt.%, particularly less than 10wt.%, preferably less than 3wt.%.

11. The use of a polymer electrolyte membrane as claimed in one of Claims 1 to 10 in a fuel cell.

12. A method of manufacturing a, particularly proton-conductive, polymer electrolyte membrane, preferably of a fuel cell, with the following method steps:
a) Dissolving a polymer in a, preferably polar organic solution.
b) Dissolving or suspending a coordination polymer (Metal Organic Framework) in the polymer solution from method step a).
c) Pouring the solution or suspension from a film from method step b).
d) Drying the film from method step c).

13. A method as claimed in Claim 12, **characterised in that** Nafion^{®} and/or particularly sulphonated, phosphonated or dosed, poly (amide imides) and/or poly (ether sulphones) and/or poly (ether ether ketones) and/or poly (ether ketone ketones) and/or poly (ether imides) and/or poly (phenoxy benzoyl phenylenes) and/or poly (benzimidazoles) and/or poly (azoles) are dissolved in the organic solution as the membrane polymer.

14. A method as claimed in Claim 12 or 13, **characterised in that** a sulphonted poly (ether ether ketone), SPEEK, is dissolved as the membrane polymer.

15. A method as claimed in Claim 14, **characterised in that** the degree of sulphonation of the SPEEK is less than 70%, particularly less than 60% and preferably less than 50%.

## Revendications

1. Membrane électrolyte polymère, en particulier d'une pile à combustible, **caractérisée en ce que** la membrane électrolyte polymère comprend des polymères de coordination (structures organométalliques).

2. Membrane électrolyte polymère selon la revendication 1, **caractérisée en ce que** la membrane électrolyte polymère comporte des groupes fonctionnels chargés négativement et liés de façon covalente et/ou une couche d'électrolyte polymère, dont les groupes ioniques sont de préférence liés à des polymères ou des squelettes polymères perfluorés et/ou à base hydrocarbonée.

3. Membrane électrolyte polymère selon la revendication 1 ou 2, **caractérisée en ce que** le polymère de la membrane comprend du Nafion®, et/ou des poly(amide-imides) et/ou des poly(éther sulfones) et/ou des poly(éther-éther-cétones) et/ou des poly(éther-cétone-cétones) et/ou des poly(éther-imides) et/ou des poly(phénoxy-benzoyl-phénylènes) et/ou des poly(benzimidazoles) et/ou des poly(azoles) en particulier sulfonés, phosphonés ou dopés.

4. Membrane électrolyte polymère selon l'une des revendications 1 à 3, **caractérisée en ce que** le polymère de la membrane est une poly(éther-éther-cétone) sulfonée, SPEEK.

5. Membrane électrolyte polymère selon la revendication 4, **caractérisée en ce que** le degré de sulfonation de la SPEEK est inférieur à 70 %, en particulier inférieur à 60 % et de préférence inférieur à 50 %.

6. Membrane électrolyte polymère selon l'une des revendications 1 à 5, **caractérisée en ce que** la taille des cellules élémentaires du polymère de coordination est comprise dans la plage de 0,3 à 15 nm.

7. Membrane électrolyte polymère selon l'une des revendications 1 à 6, **caractérisée en ce que** le polymère de coordination est issu d'un coupleur organique comprenant au moins un groupe phosphonate et/ou un groupe carboxylate et/ou des complexes donneurs d'azote.

8. Membrane électrolyte polymère selon l'une des revendications 1 à 7, **caractérisée en ce que** le polymère de coordination comporte des sites de coordination et des molécules d'eau à l'intérieur de la paroi des pores.

9. Membrane électrolyte polymère selon l'une des revendications 1 à 8, **caractérisée en ce que** le polymère de coordination est formé avec des sites de coordination qui ne sont pas occupés par des ligands à structures organométalliques.

10. Membrane électrolyte polymère selon l'une des revendications 1 à 9, **caractérisée en ce que** le polymère de coordination est présent dans la membrane polymère à raison d'une charge inférieure à 20 % en poids, en particulier inférieure à 10 % en poids, de préférence inférieure à 3 % en poids.

11. Utilisation d'une membrane électrolyte polymère selon l'une des revendications 1 à 10 dans une pile à combustible.

12. Procédé de fabrication d'une membrane électrolyte polymère, en particulier d'une membrane conductrice de protons, de préférence d'une pile à combustible, comprenant les étapes suivantes consistant à :
a) dissoudre un polymère dans une solution organique, de préférence polaire,
b) dissoudre ou mettre en suspension un polymère de coordination (structures organométalliques) dans la solution polymère résultant de l'étape de traitement a),
c) former un film en faisant couler la solution ou la suspension de l'étape de traitement b), et
d) sécher le film résultant de l'étape de traitement c).

13. Procédé selon la revendication 12, **caractérisé en ce que** l'on dissout dans la solution organique en tant que polymère de la membrane du Nafion®, et/ou des poly(amide-imides) et/ou des poly(éther sulfones) et/ou des poly(éther-éther-cétones) et/ou des poly(éther-cétone-cétones) et/ou des poly(éther-imides) et/ou des poly(phénoxy-benzoyl-phénylènes) et/ou des poly(benzimidazoles) et/ou des poly(azoles) en particulier sulfonés, phosphonés ou dopés.

14. Procédé selon la revendication 12 ou 13, **caractérisé en ce que** l'on dissout une poly(éther-éther-cétone) sulfonée, SPEEK, en tant que polymère de la membrane.

15. Procédé selon la revendication 14, **caractérisé en ce que** le degré de sulfonation de la SPEEK est inférieur à 70 %, en particulier inférieur à 60 % et de préférence inférieur à 50 %.
